# EUROPEAN PATENT APPLICATION

(11) **EP 4 152 184 A1**
(43) Date of publication of application: **22.03.2023**
(21) Application number: 21197573.5
(22) Date of filing: 17.09.2021
(51) Int. Cl.: G06F 21/32, G06F 21/64, H04L 9/40, H04L 9/32

(54) **PROCESS OF SIGNING DOCUMENTS**

(71) Applicant: Freshape SA, 1020 Renens (CH)
(72) Inventor: UNUCHEK, Dmitrii, 1690 Villaz-St-Pierre (CH); GUÉRIN, Guillaume, 1690 Villaz-St-Pierre (CH)
(74) Representative: Noll, Ronald

(57) **Abstract**

There is described a process of signing documents comprising generating a document identification (DID) of a document to be signed by at least one signatory and encoding the document identification (DID) into one or more watermarks (WM; WM_{SA}; ...). A hard copy (DOC_{HC}) of the document to be signed incorporating the one or more watermark (WM; WM_{SA}; ...) is produced. The one or more watermarks (WM; WM_{SA}; ...) provided on the hard copy (DOC_{HC}) of the document is/are read using an optical reader device (ORD; 10) and the document identification ([DID]_{ENC}) encoded into the one or more watermarks (WM; WM_{SA}) read by the optical reader device (ORD; 10) is decoded. The hard copy (DOC_{HC}) of the document to be signed is associated to a corresponding digital copy (DOC_{DC}) of the document to be signed based on the decoded document identification ([DID]_{DEC}). Signing of the document by the at least one signatory is performed using a digital signing device (DSD; 10), and signatory information (K_{SIG}) unique to the at least one signatory using the digital signing device (DSD; 10) is obtained. Finally, a digital signature (SIG) of the digital copy (DOC_{DC}) of the document is generated based on the decoded document identification ([DID]_{DEC}) and the signatory information (K_{SIG}), following which the digital signature (SIG) is applied to a digitally signed copy (DOC_{SIG}) of the document.

## Description

### TECHNICAL FIELD

The present invention generally relates to a process of signing documents, and more specifically to such a process that allows bridging of the paper and digital worlds to ensure reliable and robust signature of documents.

### BACKGROUND OF THE INVENTION

International (PCT) Publication No. WO 2018/211475 A1 discloses a method of signing and authenticating documents that combines the digital signature of documents (using typical hash functions such as SHA-256) with a biometric signature of the signatory. More specifically, the proposed method includes:
a) creating a first hash of a digital document (such as but not limited to a pdf document) to be signed with a signing device controller;
b) forwarding the first hash and data set suitable for visually displaying the document to a signing device;
c) displaying the image of the document for a signatory with the signing device;
d) recording a biometric signature of the signatory with the signing device;
e) extracting a biometric identifier of the signatory with the signing device;
f) encrypting the biometric identifier with the signing device;
g) creating a second hash from the encrypted biometric identifier with the signing device;
h) concatenating the first hash and the second hash using the signing device and creating a concatenated hash;
i) signing the concatenated hash with a cryptographic signing key stored in the signing device using the signing device, thereby creating a signed concatenated hash;
j) forwarding the encrypted biometric identifier and the signed concatenated hash to the signing device controller; and
k) concatenating the document, the encrypted biometric identifier and the signed concatenated hash to create a signed document.

According to WO 2018/211475 A1, the signing device may be any suitable signing device, including e.g. a signature pad with integrated display as marketed by signotec GmbH.

While the method of WO 2018/211475 A1 provides an increased level of security in that signature of the document combines digital signature of the document per se with a biometric signature associated to the signatory, the method has certain practical limitations, most notably the fact that the signing process in essence happens in a fully digital, paperless world and does not therefore provide any solution that would allow efficient bridging of the paper and digital worlds, bearing in mind that people are still very much committed to the desire to sign document in paper form, whenever possible.

U.S. Patent No. US 7,024,562 B1 discloses a method and system for carrying out secure digital signature that likewise combines the use of a biometric identifier and a digital seal of a document derived from a hash function. This solution in effect suffers from the same limitations as discussed above in connection with the method of WO 2018/211475 A1.

U.S. Patent No. US 6,081,610 A discloses a system and method for verifying signatures on documents such as checks and affidavits. Initially, a customer who is to obtain a verified signature, at some point in time, registers with a signatory authority, and a secret key, having public and private components, is established uniquely for that customer. When a document requires a verified signature, the customer presents the document and proof of his/her identity, such as a preprogramed computer-interfacable card, to a signature system. The system accesses the archive of the private portion of the customer's key, and generates an encoded signature based, in part, on the content of the document. Accordingly, when a recipient of the document later wishes to verify the signature, the recipient uses the customer's public key to decode the signature. The signature can then be verified against the content of the document. According to US 6,081,610 A, the signature so generated is associated with the document, preferably by printing the signature directly onto a hard copy of the document.

Somewhat similar solutions are disclosed in U.S. Patent Publications Nos. US 2006/0265590 A1 and US 2006/0271787 A1. In this case, a document that is to be digitally signed is input into a secure hash function to produce a condensed version (or hash). A digital signature of the document is generated and a physical manifestation of the digital signature (such as a 2D barcode) is then affixed to a hard copy of the document, such as by printing. A scanner, or like optical reader device, may then be used to read the physical manifestation of the digital signature with a view to be decrypted and allow verification of the authenticity of the document.

While the solutions disclosed in US 6,081,610 A, US 2006/0265590 A1 and US 2006/0271787 A1 contemplate bridging the paper and digital worlds, the signing process per se still happens exclusively in the digital world and these solutions mere contemplate affixing a physical manifestation of the relevant digital signature on a hard copy of the document.

There therefore remains a need for an improved solution.

### SUMMARY OF THE INVENTION

A general aim of the invention is to provide a process of signing documents that obviates the limitations and constraints of the known solutions.

More specifically, an aim of the present invention is to provide such a solution that efficiently and reliably bridges the paper and digital worlds.

A further aim of the invention is to provide such a solution that in effect allows any number of signatories to sign any given document, and this with the absolutely certainty that the document being submitted for signature, in hard copy form, is the right document.

Another aim of the invention is to provide such a solution that efficiently combines digital signing of the document itself and information that is unique to each signatory signing the document.

Yet another aim of the invention is to provide such a solution that, by way of preference, allows the signing process to be put into practice in a manner that is as natural as possible and that does not take people aback.

These aims, and others, are achieved thanks to the solutions defined in the claims.

There is accordingly provided a process of signing documents, the features of which are recited in claim 1, namely a process of signing documents comprising the following steps:
(a) generating a document identification of a document to be signed by at least one signatory;
(b) encoding the document identification into one or more watermarks;
(c) producing a hard copy of the document to be signed incorporating the one or more watermarks;
(d) reading the one or more watermarks provided on the hard copy of the document using an optical reader device;
(e) decoding the document identification encoded into the one or more watermarks read by the optical reader device;
(f) associating the hard copy of the document to be signed to a corresponding digital copy of the document to be signed based on the decoded document identification;
(g) signing of the document by the at least one signatory using a digital signing device;
(h) obtaining signatory information unique to the at least one signatory using the digital signing device; and
(i) generating a digital signature of the digital copy of the document based on the decoded document identification and the signatory information, and applying the digital signature to a digitally signed copy of the document.

In accordance with an embodiment, the process involves signature of the document by multiple signatories, and the digital signature, or any derivative thereof, of the digitally signed copy of the document signed by a previous signatory is used as document identification for the purpose of subsequent signature of the document by at least one further signatory. Alternatively, the same document identification may be used for the purpose of signature by all signatories and the digital signature of the digitally signed copy of the document may be generated on the basis of concatenated signatory information of all signatories.

In accordance with a particularly preferred embodiment, the optical reader device and the digital signing device are one and a same optical pen or stylus device that is capable both of reading the one or more watermarks at step (d) and obtaining the signatory information at step (h) by extracting biometric information unique to the at least one signatory's signature performed at step (g).

In this latter preferred context, signing of the document at step (g) may especially be carried out on the hard copy of the document, and the optical pen or stylus device may further be capable of leaving an inked trace of the signatory's signature performed at step (g) on the hard copy of the document. Additionally or alternatively, a digital image of the signatory's signature performed at step (g) may be applied onto the digitally signed copy of the document.

In effect, one will appreciate that the signing of the document at step (g) preferably and advantageously takes place directly on the hard copy of the document, but that other embodiments could provide for signature of the digital copy of the document instead.

By way of preference, a surface of the hard copy of the document may be further provided with position-encoding patterns designed to allow position determination of the optical pen or stylus device with respect to the surface of the hard copy of the document, in which case the optical pen or stylus device is further configured to perform position determination of the optical pen or stylus device with respect to the surface of the hard copy of the document based on optical detection of said position-encoding patterns. These position-encoding patterns may be printed along with the hard copy of the document at step (c) or be provided on blank paper used to print the hard copy of the document at step (c).

In accordance with embodiments of the invention, the digital signing device may be a user authentication device, such as a PIN-protected device, a smartcard reader device or a biometric recognition device. The biometric device may in particular be a fingerprint recognition device, a handwriting recognition device, a voice recognition device, a retina recognition device, or a face recognition device, all of which are suitable to perform steps (g) and (h). The use of an optical pen or stylus device both as optical reader device and digital signing device however remains a preferred and particularly advantageous embodiment.

The one or more watermarks preferably is or include a signing area watermark that is provided in a signing area of the hard copy of the document. Especially, in such case, reading of the signing area watermark at step (d) and obtaining the signatory information at step (h) may advantageously be carried out at the same time using the aforementioned optical pen or stylus device.

Moreover, one or more sensitive area watermarks may further be provided in one or more sensitive areas of the hard copy of the document.

By way of preference, each watermark is position-dependent (i.e. encodes additional information related to the actual position of each watermark on the document) to prevent replication of the watermark in other areas of the hard copy of the document.

Any one of the one or more watermarks may advantageously be printed on the hard copy of the document by means of an ink, such as a near-infrared (NIR) ink, that is invisible to the naked eye but detectable by means of the optical reader device. In this way, the watermark(s) will not in any way interfere visually with the information provided on the document to be signed.

Step (f) mentioned above may in particular include checking authenticity of the document to be signed based on the decoded document identification, thereby providing for a further verification step ensuring that the hard copy of the document being presented for signature to the relevant signatory indeed corresponds to an authentic document that has not in any way been tampered with.

The document identification may especially be based on or derive from a cryptographic hash function.

Furthermore, step (h) preferably includes obtaining a private encryption key unique to the at least one signatory, thereby providing enhanced security in that the relevant encryption key is only accessible to the relevant signatory signing the document.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic diagram of the underlying principle that the invention purports to achieve, namely bridging the paper and digital worlds to ensure reliable and robust signature of documents;
Figure 2 is a schematic diagram illustrating steps carried out in accordance with an embodiment of the invention with a view to encode a document identification into a watermark intended to be applied onto a hard copy of the document to be signed;
Figure 3 is a schematic diagram illustrating steps carried out in accordance with an embodiment of the invention with a view to read and verify authenticity of the hard copy of the document to be signed;
Figure 4 is a schematic diagram illustrating steps carried out in accordance with an embodiment of the invention with a view to sign the document and generate a corresponding digital signature;
Figure 5 is a schematic illustration of an optical pen or stylus device used, in accordance with a particularly preferred embodiment of the invention, both as optical reader device for the purpose of reading watermarks applied on a hard copy of the document to be signed and as digital signing device for the purpose of signing the document; and
Figure 6 is a schematic illustration of a hard copy of a document provided with multiple watermarks, including a watermark provided in a signing area and a watermark provided in a distinct, sensitive area of the document.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein.

Embodiments of the process of the invention will especially be described hereinafter in the particular and preferred context of a use of an optical pen or stylus device both as optical reader device and digital signing device, but it will be appreciated that the process of the invention is not limited to such use. In effect, as this will be described hereafter, the process of the invention may be implemented using e.g. distinct and separate optical reader and digital signing devices.

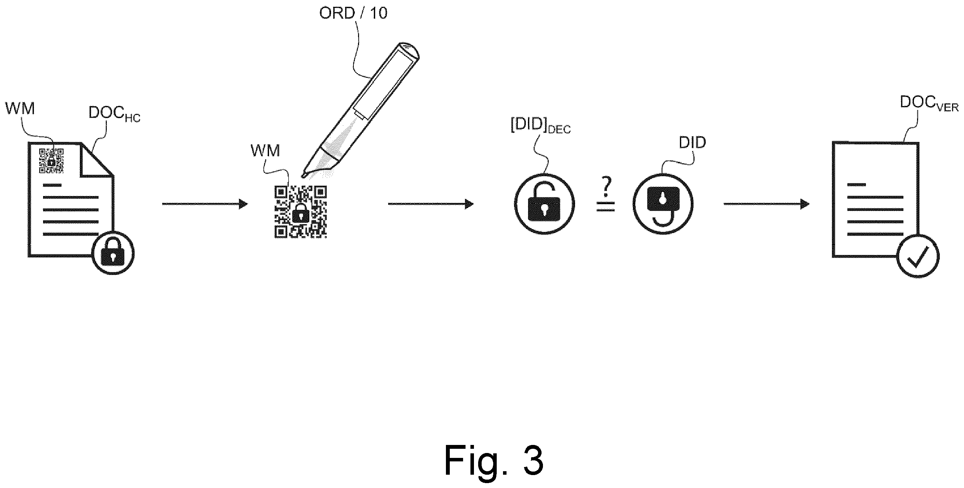

An optical pen or stylus device as schematically illustrated in Figures 3, 4 and 5, designated globally by reference numeral 10, particularly suitable for use in the context of the present invention is disclosed in European Patent Application No. 20198791.4 of September 28, 2020 in the name of the present Applicant, titled "Optical stylus for optical position determination device", the content of which is incorporated herein by reference in its entirety.

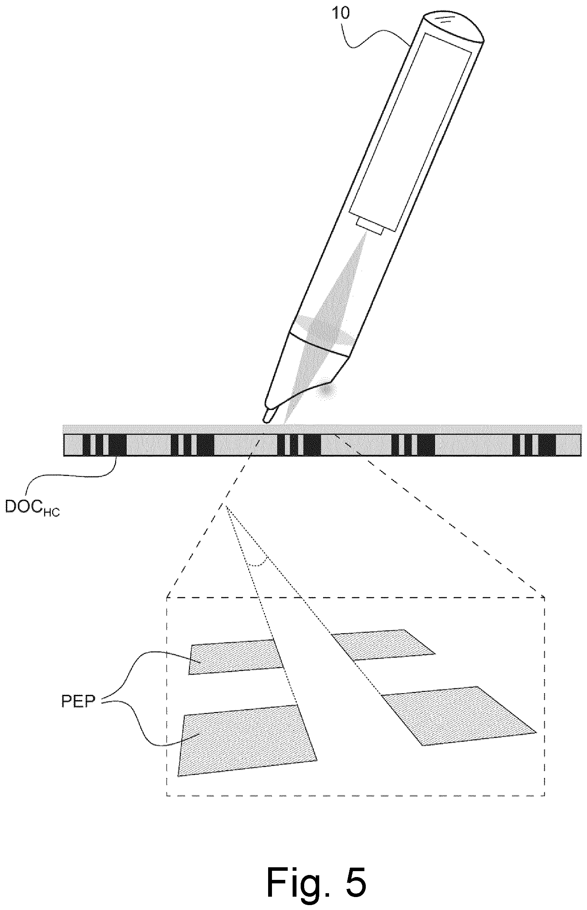

A detailed description of the relevant optical pen/stylus device 10 will not be given here as such detailed description is already provided in the aforementioned European patent application. It suffices to understand that the optical pen/stylus device 10 is capable both of reading watermarks (as explained below) provided on a hard copy of the document to be signed as well as extract a biometric signature of the signatory, i.e. detect and characterize movements performed by the signatory, using the optical pen/stylus device 10, during signature. More specifically, the optical pen/stylus device 10 includes an optical sensor arrangement (and associated processing means) that is capable of reading the watermarks. Preferably, the optical pen/stylus device 10 is further configured to perform position determination of the optical pen/stylus device 10 with respect to the surface of a hard copy of a document to be signed based on optical detection of position-encoding patterns PEP provided on the surface of the hard copy of the document (see Figure 5). This being said, other alternative or supplementary means could be provided to allow position determination of the pen/stylus device 10, including e.g. one or more auxiliary sensors, such as an accelerometer, a gyroscope, a magnetometer, a time-of-flight sensor, a proximity sensor, etc.. Further parameters could also come into consideration such as the variable pressure applied by the signatory during signature, tilt of the pen/stylus and other orientation characteristics, changes of speed and acceleration during signature, etc.. In effect, these auxiliary sensors can be used not only for position determination of the optical pen/stylus device 10 but also for extracting signatory-specific features during the signing process, which unique features are eventually helpful to authenticate the signatory.

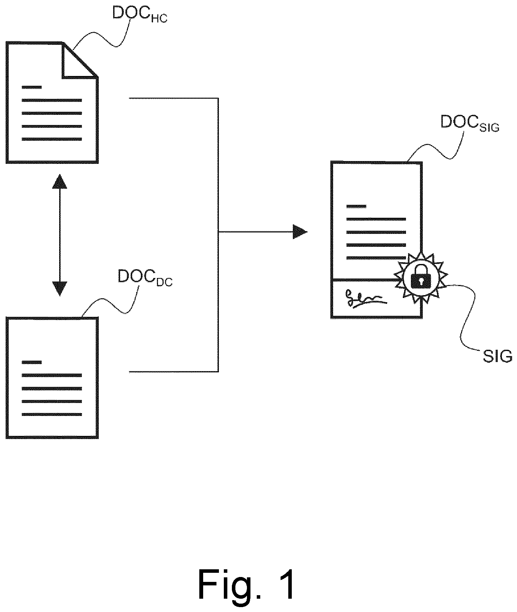

Figure 1 is a schematic diagram of the underlying principle that the invention purports to achieve, namely bridging the paper and digital worlds to ensure reliable and robust signature of documents. More specifically, the process of the invention relies on the use of both a hard copy of the document to be signed, designated DOC_{HC}, and a digital copy of the document to be signed, designated DOC_{DC}, to produce a digitally signed copy of the document, designated DOC_{SIG}, following completion of the signature process. The digital signature SIG applied to the digitally signed copy DOC_{SIG} of the document will also be referred to herein as a "biometric-digital signature" in that it is preferably based on a digital signature of the document and a biometric signature that is unique to the signatory signing the document.

From a general perspective, the process of the invention involves the execution of the following essential steps, namely:
(a) generating a document identification, hereinafter designated as DID, of a document to be signed by at least one signatory;
(b) encoding the document identification into one or more watermarks, hereinafter designated as WM, WM_{SA} and/or WM_{A};
(c) producing a hard copy DOC_{HC} of the document to be signed incorporating the one or more watermark;
(d) reading the one or more watermarks provided on the hard copy DOC_{HC} of the document using an optical reader device, designated ORD;
(e) decoding the document identification encoded into the one or more watermarks read by the optical reader device ORD;
(f) associating the hard copy DOC_{HC} of the document to be signed to a corresponding digital copy DOC_{DC} of the document to be signed based on the decoded document identification;
(g) signing of the document by the at least one signatory using a digital signing device, designated DSD;
(h) obtaining signatory information unique to the at least one signatory using the digital signing device DSD; and
(i) generating a digital signature, designated SIG, of the digital copy DOC_{DC} of the document based on the decoded document identification and the signatory information, and applying the digital signature SIG to a digitally signed copy DOC_{SIG} of the document.

This process can be executed by one or more signatories. Should the process involve signature of the document by multiple signatories, it may be particularly advantageous to use the digital signature SIG (or any derivative thereof) of the digitally signed copy DOC_{SIG} of the document signed by a previous signatory as document identification DID for the purpose of subsequent signature of the document by at least one further signatory. Alternatively, the same document identification DID may be used for the purpose of signature by all signatories and the digital signature SIG of the digitally signed copy DOC_{SIG} of the document may be generated on the basis of concatenated signatory information of all signatories.

In other words, in the simplest case scenario, involving one or multiple signatories, the document identification may e.g. be a document hash as obtained by applying a typical hash function to the document to be signed (which hash may be encrypted and decrypted using the public and private components of any suitable encryption key pair, as known in the art). In another case scenario, involving multiple signatories, the document identification may be based on the digital signature SIG of a previously signed version of the document to be signed, it being understood that the digital signature SIG itself suitably and reliably identifies the document to be signed by further signatories.

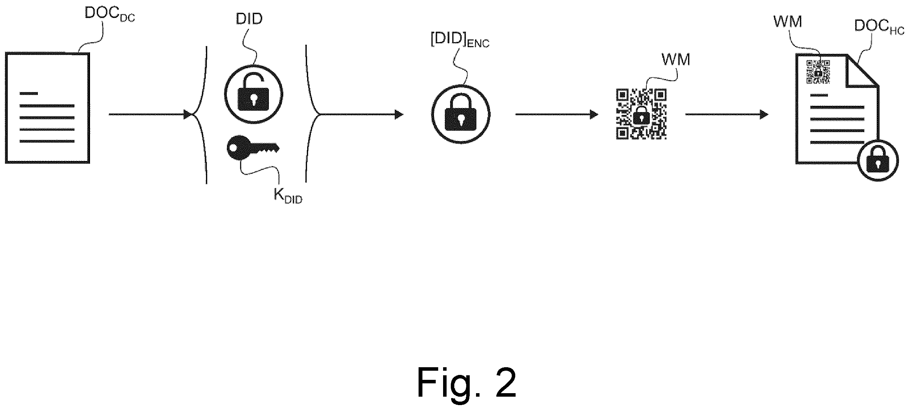

Figure 2 is a schematic diagram illustrating steps carried out in accordance with an embodiment of the invention with a view to encode the document identification, designated DID, into a watermark, designated WM, intended to be applied onto a hard copy DOC_{HC} of the document to be signed. In other words, Figure 2 is illustrative of an embodiment of steps (a) to (c) discussed above.

As already mentioned, a suitable document identification DID may be a hash that results from applying a hash function to a digital copy DOC_{DC} of the document to be signed. This hash may be encrypted, as known as such in the art, using a suitable encryption key K_{DID}. The encrypted document identification, designated [DID]_{ENC}, may then be encoded into a corresponding watermark WM, such as in the form of a suitable 2D barcode that can then be applied onto any desired portion of a hard copy DOC_{HC} of the document to be signed. More than one watermark could in effect be generated and applied onto the hard copy DOC_{HC} of the document to be signed.

Once the relevant watermark(s) has(have) been applied on the hard copy DOC_{HC} of the document to be signed, such watermark(s) can be exploited to ensure that any signatory to whom the hard copy DOC_{HC} of the document is handed over for signature can suitably check the document prior to signature thereof. As this will be explained later on, one or more watermarks may be further provided in one or more sensitive areas of the hard copy DOC_{HC} of the document. These watermarks may especially be position-dependent, i.e. encode further information related to the relevant position of each watermark on the document.

Figure 3 is a schematic diagram illustrating steps carried out in accordance with an embodiment of the invention with a view to read and verify authenticity of the hard copy DOC_{HC} of the document to be signed. In other words, Figure 3 is illustrative of an embodiment of steps (d) to (f) discussed above.

Reading of the one or more watermarks, including e.g. watermark WM shown in Figure 3, applied onto the hard copy of the document DOC_{HC} may be performed by means of any suitable optical reader device ORD, including e.g. a scanner. By way of preference, reading of the watermark(s) is performed by means of the aforementioned optical pen/stylus device 10. The relevant document identification encoded into the watermark WM can then be decoded, yielding a decrypted document identification [DID]_{DEC}, and compared with the document identification DID of the corresponding digital copy DOC_{DC} of the document to ensure that the hard copy of the document is properly identified and verified, as depicted in Figure 3 by the verified copy, designated DOC_{VER} of the document. The corresponding digital copy DOC_{DC} of the document to be signed may be stored in any suitable library of documents. In effect, verification of the authenticity of the document may be carried out beyond identifying and associating the hard copy DOC_{HC} of the document to its digital counterpart.

Once the document to be signed has been successfully verified and, as the case may be, authenticated, the process may proceed further with the actual signature of the document. Verification of particularly sensitive portions of the document to be signed may also be contemplated through the provision of dedicated watermarks in sensitive areas of the document.

Signature of the document by the signatory is performed by means of a suitable digital signing device DSD that allows to obtain signatory information that is unique to the relevant signatory. In one embodiment, the digital signing device DSD may be a user authentication device, such as a PIN-protected device or a smartcard reader device, in which case the signatory needs to possess a suitable smartcard holding e.g. encryption certificates that are unique to the signatory. In other embodiments, the digital signing device DSD may be a biometric recognition device such as a fingerprint recognition device, a handwriting recognition device, a voice recognition device, a retina recognition device, or a face recognition device. One will appreciate that the essential purpose of the digital signing device DSD is verification of the signatory's identity by means of any suitable authentication method, including biometrics. The aforementioned optical pen/stylus device 10 in effect constitutes one possible example of a suitable handwriting recognition device usable as digital signing device DSD.

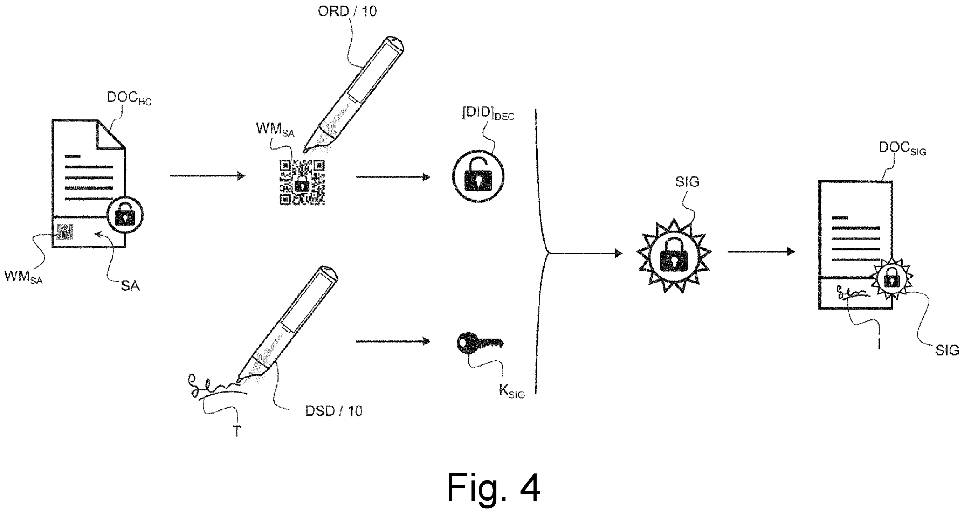

Figure 4 is a schematic diagram illustrating steps carried out in accordance with an embodiment of the invention with a view to sign the document and generate a corresponding digital signature thereof. In other words, Figure 4 is illustrative of an embodiment of steps (g) to (i) discussed above.

In this illustrative example, the hard copy DOC_{HC} of the document to be signed is preferably provided with at least of watermark, designated WM_{SA}, that is provided in a signing area SA of the document, which watermark WM_{SA} has likewise being generated on a basis of a suitable document identification of the document to be signed. Further watermarks may be provided if necessary, especially with a view to check sensitive areas of the document to be signed.

By way of preference, the aforementioned optical pen/stylus device 10 is used not only for the purpose of signing the document and obtaining relevant signatory information (i.e. as digital signing device DSD), but also as optical reader device ORD for the purpose of reading watermark WM_{SA}. In other words, reading of the watermark WM_{SA} (for the purpose e.g. of verifying authenticity of the document) and obtaining of the signatory information are here advantageously carried out at the same time using one and the same optical pen/stylus device 10. In other embodiments, the optical pen/stylus device 10 could be used exclusively as digital signing device DSD, and document verification may be undertaken by means of a separate optical reader device ORD capable of reading the relevant watermark(s) applied on the hard copy DOC_{HC} of the document to be signed.

In the illustrative example, the document identification encoded into the watermark WM_{SA} is decoded and biometric information unique to the signatory's signature is extracted to obtain the relevant signatory information. More specifically, in the illustrated example, a private encryption key K_{SIG} unique to the at least one signatory is obtained. This private encryption key K_{SIG} is only accessible to the relevant signatory based on the relevant biometric characteristics of the signatory's signature. In other words, the required encryption key K_{SIG} can only be accessed provided the biometric characteristics of the signatory's signature are consistent with a pre-existing biometric signature of the signatory. In other embodiments, the private encryption key K_{SIG} may be accessed by other user authentication means, depending on the particular nature of the digital signing device DSD being employed.

The decoded document identification [DID]_{DEC} and relevant encryption key K_{SIG} unique to the signatory are then used to generate a digital signature (or "biometric-digital signature") SIG of the digital copy DOC_{DC} of the document, which digital signature SIG can be applied to the digital copy DOC_{DC} of the document to produce a digitally signed copy DOC_{SIG} of the document, thus completing the digital signature process. In the illustrated embodiment, the relevant biometric-digital signature SIG is produced by encryption of the document identification DID using the private encryption key K_{SIG} and applying any suitable encryption technique known as such in the art.

One will accordingly appreciate that the relevant digital signature SIG not only suitably identifies the document being signed but also the identity of the signatory (or signatories) who signed the document.

By way of preference, signing of the document is performed directly on the hard copy DOC_{HC} of the document and the optical pen/stylus device 10 is further configured to be capable of leaving an inked trace, designated T, of the signatory's signature on the hard copy DOC_{HC} of the document, much like a normal pen.

Additionally, or alternatively, a digital image, designated I, of the signatory's signature may be applied onto the digitally signed copy DOC_{SIG} of the document. In this context, the aforementioned optical pen/stylus 10 may act as a handwriting digitizer capable of converting the handwriting into the desired digital image I.

As already mentioned above, and shown schematically in Figure 5, a surface of the hard copy DOC_{HC} of the document may be provided with position-encoding patterns PEP designed to allow position determination of the optical pen/stylus device 10 with respect to the surface of the hard copy DOC_{HC} of the document (as disclosed e.g. in European patent application No. 20198791.4 of September 28, 2020 in the name of the present Applicant). In this case, the optical pen/stylus device 10 is further configured to perform position determination of the optical pen/stylus device 10 with respect to the surface of the hard copy DOC_{HC} of the document based on optical detection of said position-encoding patterns PEP. The position-encoding patterns PEP may be printed along with the hard copy DOC_{HC} of the document to be signed or be provided on blank paper used to print the hard copy DOC_{HC} of the document to be signed.

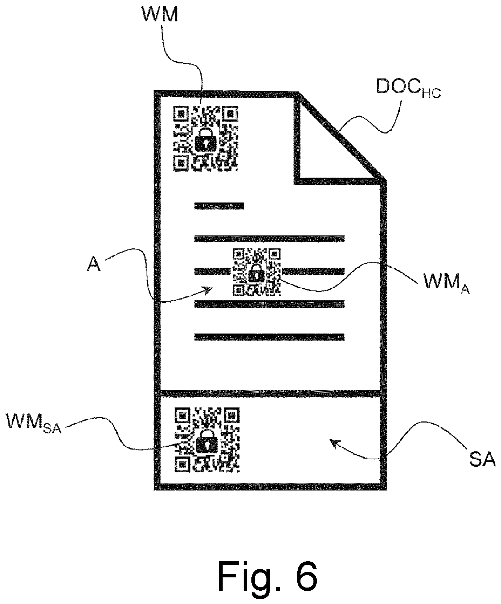

As already mentioned, more than one watermark could be provided on the hard copy of the document to be signed to not only check identity and authenticity of the document but, should this be desired, ensure that further specific areas (including e.g. dates, financial elements, etc.) of the document to be signed are appropriately checked or reviewed as part of the signing process, such as particularly sensitive areas of the document. Figure 6 schematically shows a hard copy DOC_{HC} of a document that is provided with a first watermark WM in a header portion, a signing area watermark WM_{SA} in the signing area SA, as well as a further watermark WM_{A} in a sensitive area A of the document.

As a further refinement, each watermark applied on the hard copy DOC_{HC} of the document to be signed may be position-dependent, i.e. may encode additional information related to the actual position of each watermark on the document, to prevent replication of the watermark in other areas of the hard copy DOC_{HC} of the document. In such case, if the relevant watermark is found to be located at a position different than that encoded in the watermark, which would be indicative of document tampering, the signing process may be interrupted, even if a correct document identification DID is found to be encoded in the relevant watermark.

Furthermore, any one of the relevant watermarks may be printed on the hard copy DOC_{HC} of the document by means of an ink that is invisible to the naked eye but detectable by means of the optical reader device ORD. In particular, each watermark may be printed with a near-infrared (NIR) ink detectable by means of the optical pen/stylus device 10. The same could be contemplated with regard to the provision of the aforementioned position-encoding patterns PEP, it being however preferable to avoid any possible optical interference in such case between the relevant watermark(s) and position-encoding patterns PEP, for instance through the use of distinct inks.

Various modifications and/or improvements may be made to the above-described embodiments without departing from the scope of the invention as defined by the appended claims.

For instance, as already mentioned, distinct devices could be used as optical reader device ORD and as digital signing device DSD. The use of an optical pen/stylus device both as optical reader device ORD and as digital signing device DSD however remains a particularly preferred and advantageous solution.

Furthermore, while Figure 4 shows that signature of the document is performed directly onto the hard copy DOC_{HC} of the document to be signed, other embodiments could contemplate signing of the digital copy DOC_{DC} instead, for instance by signing the document onto a digital tablet device possibly providing a visual depiction of the signing area. In other embodiments, successful user authentication by the digital signing device DSD may be assumed as being indicative of a suitable intent by the relevant signatory to sign the relevant document, without this requiring an actual handwritten signature of the document. Such may be the case for instance if the signatory's identity is authenticated by e.g. fingerprint or face recognition. Signing of the hard copy DOC_{HC} of the document however remains a preferred solution in that it is more generally accepted by the public and more natural in that respect.

### LIST OF REFERENCE NUMERALS AND SIGNS USED THEREIN

- DOC_{HC}: hard copy (printed copy) of document to be signed
- DOC_{DC}: digital copy (electronic copy) of document to be signed
- DOC_{VER}: verified copy of document
- DOC_{SIG}: digitally signed copy of document
- DID: document identification (e.g. hash value)
- [DID]_{ENC}: encoded/encrypted document identification DID
- [DID]_{DEC}: decoded/decrypted document identification DID
- K_{DID}: encryption key of document identification DID
- K_{SIG}: private encryption key associated to signatory (e.g. biometric encryption key)
- SIG: digital signature (e.g. biometric-digital signature) of digitally signed copy DOC_{SIG} of document
- SA: signing area on document to be signed
- A: sensitive area(s) on document to be signed
- T: inked trace of the signatory's signature
- I: digital image of the signatory's signature
- WM: watermark encoding document identification DID
- WM_{SA}: signing area watermark encoding document identification DID as applied in signing area SA
- WM_{A}: sensitive area watermark(s) encoding document identification DID as applied in sensitive area(s) A
- PEP: position-encoding patterns
- ORD: optical reader device (e.g. optical pen or stylus device 10) used to read watermark(s) WM, WM_{SA}, WM_{A}
- DSD: digital signing device (e.g. optical pen or stylus device 10) used to sign document
- 10: optical pen or stylus device used both as optical reader device ORD and digital signing device DSD

## Claims

1. A process of signing documents comprising the following steps:
(a) generating a document identification (DID) of a document to be signed by at least one signatory;
(b) encoding the document identification (DID) into one or more watermarks (WM; WM_{SA}; WM_{A});
(c) producing a hard copy (DOC_{HC}) of the document to be signed incorporating the one or more watermarks (WM; WM_{SA}; WM_{A});
(d) reading the one or more watermarks (WM; WM_{SA}; WM_{A}) provided on the hard copy (DOC_{HC}) of the document using an optical reader device (ORD; 10);
(e) decoding the document identification ([DID]_{ENC}) encoded into the one or more watermarks (WM; WM_{SA}; WM_{A}) read by the optical reader device (ORD; 10);
(f) associating the hard copy (DOC_{HC}) of the document to be signed to a corresponding digital copy (DOC_{DC}) of the document to be signed based on the decoded document identification ([DID]_{DEC});
(g) signing of the document by the at least one signatory using a digital signing device (DSD; 10);
(h) obtaining signatory information (K_{SIG}) unique to the at least one signatory using the digital signing device (DSD; 10); and
(i) generating a digital signature (SIG) of the digital copy (DOC_{DC}) of the document based on the decoded document identification ([DID]_{DEC}) and the signatory information (K_{SIG}), and applying the digital signature (SIG) to a digitally signed copy (DOC_{SIG}) of the document.

2. The process according to claim 1, involving signature of the document by multiple signatories,
wherein the digital signature (SIG), or any derivative thereof, of the digitally signed copy (DOC_{SIG}) of the document signed by a previous signatory is used as document identification (DID) for the purpose of subsequent signature of the document by at least one further signatory, or
wherein the same document identification (DID) is used for the purpose of signature by all signatories and the digital signature (SIG) of the digitally signed copy (DOC_{SIG}) of the document is generated on the basis of concatenated signatory information of all signatories.

3. The process according to claim 1 or 2, wherein the optical reader device (ORD) and the digital signing device (DSD) are one and a same optical pen or stylus device (10) that is capable both of reading the one or more watermarks (WM; WM_{SA}; WM_{A}) at step (d) and obtaining the signatory information (K_{SIG}) at step (h) by extracting biometric information unique to the at least one signatory's signature performed at step (g).

4. The process according to claim 3, wherein signing of the document at step (g) is carried out on the hard copy (DOC_{HC}) of the document, and wherein the optical pen or stylus device (10) is further capable of leaving an inked trace (T) of the signatory's signature performed at step (g) on the hard copy (DOC_{HC}) of the document, and/or
wherein a digital image (I) of the signatory's signature performed at step (g) is applied onto the digitally signed copy (DOC_{SIG}) of the document.

5. The process according to claim 3 or 4, wherein a surface of the hard copy (DOC_{HC}) of the document is further provided with position-encoding patterns (PEP) designed to allow position determination of the optical pen or stylus device (10) with respect to the surface of the hard copy (DOC_{HC}) of the document,
and wherein the optical pen or stylus device (10) is further configured to perform position determination of the optical pen or stylus device (10) with respect to the surface of the hard copy (DOC_{HC}) of the document based on optical detection of said position-encoding patterns (PEP).

6. The process according to claim 5, wherein the position-encoding patterns (PEP) are printed along with the hard copy (DOC_{HC}) of the document at step (c) or are provided on blank paper used to print the hard copy (DOC_{HC}) of the document at step (c).

7. The process according to claim 1 or 2, wherein the digital signing device (DSD) is a user authentication device, such as a PIN-protected device, a smartcard reader device or a biometric recognition device, including in particular a fingerprint recognition device, a handwriting recognition device (10), a voice recognition device, a retina recognition device, or a face recognition device.

8. The process according to any one of the preceding claims, wherein the one or more watermarks is or include a signing area watermark (WM_{SA}) that is provided in a signing area (SA) of the hard copy (DOC_{HC}) of the document.

9. The process according to any one of claims 3 to 6, wherein the one or more watermarks is or include a signing area watermark (WM_{SA}) that is provided in a signing area (SA) of the hard copy (DOC_{HC}) of the document,
and wherein reading of the signing area watermark (WM_{SA}) at step (d) and obtaining the signatory information (K_{SIG}) at step (h) are carried out at the same time using the optical pen or stylus device (10).

10. The process according to claim 8 or 9, wherein one or more sensitive area watermarks (WM_{A}) are further provided in one or more sensitive areas (A) of the hard copy (DOC_{HC}) of the document.

11. The process according to any one of the preceding claims, wherein each watermark (WM; WM_{SA}; WM_{A}) is position-dependent to prevent replication of the watermark (WM; WM_{SA}; WM_{A}) in other areas of the hard copy (DOC_{HC}) of the document.

12. The process according to any one of the preceding claims, wherein any one of said one or more watermarks (WM; WM_{SA}; WM_{A}) is printed on the hard copy (DOC_{HC}) of the document by means of an ink, such as a near-infrared (NIR) ink, that is invisible to the naked eye but detectable by means of the optical reader device (ORD; 10).

13. The process according to any one of the preceding claims, wherein step (f) includes checking authenticity of the document to be signed based on the decoded document identification ([DID]_{ENC}).

14. The process according to any one of the preceding claims, wherein the document identification (DID) is based on or derives from a cryptographic hash function.

15. The process according to any one of the preceding claims, wherein step (h) includes obtaining a private encryption key (K_{SIG}) unique to the at least one signatory.
